# EUROPEAN PATENT SPECIFICATION

(11) **EP 2 931 032 B1**
(45) Date of publication and mention of the grant of the patent: **04.09.2019**
(21) Application number: 13818489.0
(22) Date of filing: 17.12.2013
(51) Int. Cl.: A01M 19/00, A01M 1/02

(54) **CRAWLING INSECT COUNTING DEVICE, SYSTEM AND METHOD FOR INDICATING CRAWLING INSECT INFESTATION AND DETERMINING A MOMENT FOR TREATMENT AND/OR CONTROL OF SAID INSECTS**
VORRICHTUNG ZUR ZÄHLUNG KRIECHENDER INSEKTEN, SYSTEM UND VERFAHREN ZUR ANZEIGE DES EINDRINGENS KRIECHENDER INSEKTEN UND ZUR BESTIMMUNG EINES MOMENTS ZUR BEKÄMPFUNG UND/ODER KONTROLLE DIESER INSEKTEN
DISPOSITIF DE COMPTAGE D'INSECTES RAMPANTS, SYSTÈME ET PROCÉDÉ D'INDICATION D'INFESTATION PAR DES INSECTES RAMPANTS ET DE DÉTERMINATION D'UN MOMENT POUR LE TRAITEMENT ET/OU LA LUTTE CONTRE LESDITS INSECTES

(30) Priority: 17.12.2012 NL 2009997
(43) Date of publication of application: 21.10.2015
(73) Proprietor: Stichting Wageningen Research, 6708 PB Wageningen (NL)
(72) Inventor: MUL, Monique Francisca, NL-1693 HG Wervershoof (NL); PLOEGAERT, Johannes Petrus Maria, NL-6717 VW Ede (NL)
(74) Representative: V.O.
(86) International application number: PCT/NL2013/050907
(87) International publication number: WO 2014/098579

(56) References cited:
- WO-A1-02/088700
- WO-A1-2012/054397
- GB-A- 191 010 095
- JP-A- 2000 000 050

## Description

### Field of the invention

The invention relates to a crawling insect counting device for counting a number of poultry red mites, during a time period and a system and method for indicating a best moment for treating and/or controlling the poultry red mites to prevent poultry red mite infestation.

### Background of the invention

Poultry facilities where poultry is raised and kept, for instance egg producing farms, can be prone to insect infestations, for instance poultry red mite infestations. Poultry red mites (i.e. *Dermanyssys gallinae*) live in cracks and crevices in the poultry facilities in the vicinity of hens. The mites feed on blood of poultry for development into deutonymph stage and adult stage and for reproduction. To feed themselves the mites travel from their hiding place to the hens and stay on the hens for a feeding period of approximately 30-60 minutes while feeding blood. Subsequently, the mites return to the hiding location to digest the blood meal, for mating and laying eggs.

The presence of large amounts of mites, i.e. high infestation rates, in the poultry facilities may lead to reduced poultry welfare, for instance due to more distress, to lower body weight and to reduced egg production. This may lead to increased costs in the poultry industry, lower egg production, increased mortality, and impact on human health for instance due to the methods of treatment of the poultry red mites or in case of being bitten by the poultry red mites. Besides, the mites may be a potential vector of bacteria and viruses. Consequently, keeping the amount of poultry red mites in the respective poultry facility as low as possible may be desired to minimize the mentioned problems. However, usually mite infestations may be noticed when mites appear on belts and feeders, clumps of mites and blood spots are visible. But when noticing, the infestations already are high and hard to control. In order to monitor the amount of mites in a specific location multiple mite traps may be distributed in a poultry facility and checked regularly, for instance every 1-2 weeks or more frequently. Such a trap may for instance be a Nordenfors trap, a tube trap, the back side of dried manure, a folded board, or a perch for birds (see GB 191010095 A) having a receptacle for the collection or trapping of red mites. A drawback of using such traps is that only presence of the poultry red mite in the poultry facility can be indicated. Furthermore, only a rough indication can be made about the severity of a poultry red mite infestation, for instance by indicating the presence of none, a few, many or very many mites. Monitoring the development of the population of the mites in the poultry location in numbers is time-consuming with such traps. Furthermore, with said traps small numbers of mites can not be counted automatically. When checking the traps it is possible to determine the amount of mites in a first rough division. Accurate numbers of mites can be determined after counting, which usually happens later in time. Consequently, it is difficult to minimize the negative effects of the presence of mites in the poultry facilities in an efficient manner. When using the above mentioned traps it is thus difficult to treat or control the mites at the earliest and most cost effective moment possible. Besides, use of said traps is labour intensive since every trap has to be inspected once in a while, the traps are mostly applicable to a specific housing system or the traps only fit for research purposes.

To overcome or at least minimize the above problems, it is an object of the invention to provide an improved monitoring device. More in particular, it is an object of the invention to provide a monitoring device that enables effective counting of the mites which at the same time is applicable in all types of poultry facilities.

### Summary of the invention

Thereto, according to a first aspect of the invention according to claim 1, a crawling insect counting device for determining a number of poultry red mites in a poultry facility, is provided. Said counting device is configured for determining the number of poultry red mites during a time period, wherein the device comprises a receiving section configured for receiving poultry red mites and for enabling the displacement of the poultry red mites. The insect counting device further comprising a sensor device arranged adjacent an exit opening of the receiving section, wherein the sensor device is adapted to count individual poultry red mites leaving the receiving section through the exit opening and passing said sensor device. Optionally the receiving section tapers towards the exit opening. The exit opening may have a diameter of 1-2 mm, e.g. 1.5 mm or 1.3 mm

It is also possible that the receiving section is free from taper towards the exit opening, i.e has a constant cross section along its length. Optionally the receiving section is straight towards to the exit opening. The receiving section can have an entrance and exit opening with a diameter of 1-2 mm, e.g. 1.5 mm. It has been found that the poultry red mites accept such entrance opening as hiding location and actively displace into the counting device of their own motion.

Also the exit opening with a diameter of 1-2 mm at the end of the tapered receiving section may be accepted as safe route by the poultry red mites.

With the crawling insect counting device according to the invention it is possible to determine a number of mites passing through said device during a time period for instance during a day. By placing the device at a suitable location, the mites are guided through the device by first entering the receiving section of the device, subsequently passing the, e.g. tapered, end of the receiving section and passing the sensor device. The sensor device detects the individual passing mites and thus enables determining the amount of mites accurately.

Preferably, the sensor device comprises at least one sensor such as an infrared sensor for detecting the mites when passing said sensor. By using such sensor the amount of mites may be counted. Dependent on the sensor it may be possible to determine the size of the individual mites for instance to define the phase in the poultry red mites lifecycle. Knowing the stage of the individual mites may give an indication of the moment the population will grow enormously.

In a different embodiment, the device may comprise a further sensor, for instance a further infrared sensor, arranged adjacent the first sensor and rotated and/or displace with respect to the first sensor.

In further embodiment of the invention, the sensor device may comprise a counting space provided next to the exit opening, wherein the counting space has a substantially elongate shape with a substantially constant diameter, for instance of approximately 1-2 mm, along an entire length of the space. The counting space is defined as the space in which the mite is present at the moment of counting.

In order to prevent occurrence of blockage, at least in the counting space, the sensor device preferably comprises an insect removal device configured for quick removal of the insects after passing the sensor. Such an insect removal device may be configured for air suction, blowing air or creating a venturi effect, preferably to create an flow with a speed of approximately 5.5 m/s or more, preferably a speed of approximately 10 m/s in a pipe with a inner diameter of approximately 1-2 mm, e.g. having an external diameter of approximately 3.175 mm (1/8 inch).

The counted mites may be gathered for instance to be able to determine the kind of insects present and to determine diseases if carried by said insects. Alternatively, the counted insects may be blown back into the surroundings of the counting device.

To be able to process the insect count values during the time period, the insect counting device preferably comprises a processor. The processor determines, based on the output from the sensor, if the output represents a valid count. The valid count may be transmitted immediately or may be gathered in a total count and transmitted after a certain time period. Therefore, the processor may also be adapted to transmit the insect count values to a processing unit that is able to process the transmitted values. The processor may also be adapted to control the insect removal device, for instance the moment to start operating the removal device and/or the operating time of said removal device.

In order to lure the insects such as the poultry red mites into the receiving section of the counting device and subsequently into the sensor device, the insect receiving section preferably comprises a substantially longitudinal channel. The channel may have a constant cross section or may taper towards the exit opening of the receiving section. If the entrance has the diameter of 1-2 mm, preferably the receiving section is short, e.g. 20 mm or less. If the diameter of the entrance opening is larger, the channel preferably has a longer length of e.g. at least 5 centimetres, for instance more than 10 centimetres, depending on the incidence of light in the channel.

According to a further embodiment of the invention, a diameter of the exit opening of the insect receiving section and a diameter of the counting space both may be approximately 2.0 mm or smaller, preferably approximately 1.5 mm. Such diameter of the exit opening and of the counting space enables passing of the individual poultry red mites along the sensor preferably one by one. Preferably the diameter of the exit opening of the insect receiving section and a diameter of the counting space both may be 1.0 mm or larger.

In order to prevent hiding and clogging of the mites inside the receiving section of the insect counting device, the inner corners of the receiving section are rounded. Preferably, the inner corners have the smallest radius at the entrance opening of the receiving section. This is advantageous if the counting device is placed inside the inner space of a beam, for instance a U-beam. After insertion of the counting device in the inner space of the beam, no hiding space for the mites is left between the outer surfaces of the counting device and the inner surfaces of the beam. Preferably, the radius of the inner corners increases along the receiving section from the entrance opening of the receiving section towards the exit opening of the receiving section. Preferably, adjacent the exit opening the cross section of the receiving section is substantially circular. Due to the increasing radius of the tapered end, the mites are led to the sensor device without the possibility to hide.

Optionally, the counting device is at least partially positioned inside a perch for hens. The perch may include a hole which is in communication with the entrance opening of the counting device. The hole in the perch may e.g. have a diameter of 1-2 mm.

The invention also relates to a system according to claim 7 for determining a number of poultry red mites at a poultry facility, and for indicating a moment for treatment of the poultry red mites to prevent, or at least minimize, poultry red mite infestation in said facility, the system comprising at least one insect counting device according to any one of the preceding claims and a processing unit operatively coupled to the registration unit of the insect counting device for receiving real-time insect count values from the insect counting device, wherein the processing unit is configured to compare the received poultry red mite count value with an estimated value and based on the comparison to determine a suitable moment for treatment. The processing unit may be programmed with a dynamic adaptive model that is able to determine said estimated value based on at least one process input variable and measured poultry red mite count values over time. It was realised by the inventor that dynamic adaptive modelling allows estimating the development of the population of the mites and estimating the moment the amount of mites increases enormously, by at least counting the mites traveling from the hiding places towards the poultry, and vice versa, during a period of time. By using past, present and, if so desired, futures insect counting values, said moment may be predicted. When being aware of such prediction, treating or controlling of the mites population may be started in time such that a further increase in population may be averted.

To further optimize the estimation accuracy, it is possible or sometimes desirable that the process input variable at least comprises an ambient temperature of the system. Growth of the mite population is mainly influenced by the temperature and presence of food, i.e. blood. The poultry red mites develop optimally with temperatures between 27 and 37°C, e.g. between 30 and 35°C. Growth of a mite from egg to fully-developed mite may take 5 to 7 days when the temperature is in the range of 27-37°C. Optionally ambient humidity of the system may be an input variable to the system.

Preferably, the processing unit is arranged for determining the estimated value using dynamic adaptive modelling such as Bayesian dynamic modelling, which provides a flexible and robust way of instantaneously estimating the relationship between mite counting values over time. Bayesian dynamic modelling may also be used for predicting a future moment of a further increase in mite population and e.g. the influence of at least temperature thereon.

It has been found by the inventor that the insect counting device, when used for counting mites, has to be adapted to the displacement behaviour of the mites. Mites tend to displace in upward direction when going to feed, thus to optimize counting of the mites, the at least one insect counting device in the system preferably is arranged below a dwelling area of the poultry, such as below a sitting location for the poultry. Also, the at least one insect counting device may be arranged substantially vertically such that the insect receiving section extends substantially vertically. The entrance opening of the receiving section may be located at a lower end of the device and the sensor device may be located at an upper end of the device, such that insects can displace along a substantially vertically extending upward path. It is also possible that the entrance opening of the receiving section may be located at an upper end of the device and the sensor device may be located at a lower end of the device, such that insects can be counted while displacing along a substantially vertically extending downward path from the feeding location to the hiding location. It is also possible that the at least one insect counting device is arranged substantially horizontally, e.g. underneath a perch. In that case the insect receiving section may extend substantially vertically or substantially horizontally. It is noted that poultry red mites usually displace in the dark.

To be able to monitor the mite population at different locations for instance along different beams or perches provided in a poultry facility, the system preferably comprises multiple insect counting devices, wherein the devices are arranged at different locations at mutual distance such that the system can determine a location at which the treatment is advised. The respective insect counting devices do not need to be distributed evenly. The distance between two neighbouring devices may vary. By simultaneously monitoring the amount of mites during a period of time at the different locations, it can be estimated, using dynamic adaptive modelling at which location treatment and/or controlling of the mite population is advised.

To be able to inform a user of the predicted moment and/or location for treatment, the processing unit may be provided with indicating means for indicating a moment in time and/or a location for treatment.

It is noted that from US 5,646,404 a system for quantitative detection of insect infestations in stored products such as grains, fruits and the like is known. The known system may comprise an insect counting device which comprises a construction that is not suitable for counting poultry red mites. The known counting device is intended to count the insects passing a sensor, when the insects fall downward through the counting device. However, as mentioned before, it was found that poultry red mites tend to displace in an upward direction from hiding location towards the hens. Due to the material of the known device, i.e. Teflon, the poultry red mites will be able, once present in the counting device, to move in the preferred upward direction. Teflon is known as a smooth material. But it has been found that the poultry red mites paws can extend through the material easily enabling the possibility to climb upwards instead of falling down or that the poultry red mites attach to the smooth surface with a suction cup like construction. Consequently, the known device will not count the amount of poultry red mites accurately.

The present invention also relates to a poultry facility according to claim 12 for raising and keeping poultry, such as an aviary barn, barn system, enriched cages or a free range farm, wherein the facility is provided with a system as above described, comprising multiple mite counting devices according to the invention, wherein depending on the kind of farm, each counting device is located between different mite hiding locations and poultry in the vicinity of each hiding location, such that the mites when moving from the hiding location towards the poultry, or vice versa, pass through the sensor device of the mite counting device. Such poultry facility provides similar effects and advantages as described before with the system and/or with the counting device.

According to a further aspect of the invention a method according to claim 14 is provided for determining a number of poultry red mites at a poultry facility, during a period of time and for indicating a moment for treatment of the poultry red mites to prevent, or at least minimize, poultry red mite infestation in said facility, the method comprising counting poultry red mites over time, preferably by using at least one insect counting device according to the invention, and comparing real-time poultry red mite count values with an estimated value and based on the comparison to predict a suitable moment for treatment. The estimated value may be based on measured poultry red mite count values over time, e.g. using dynamic adaptive modelling such as Bayesian dynamic modelling. The estimated value may also be determined based on at least one process input variable and measured poultry red mite count values over time using dynamic adaptive modelling such as Bayesian dynamic modelling. Hence, determining of the number of poultry red mites in time and predicting the best moment for treatment and/or controlling of the mites may be efficiently controlled using adaptive modelling.

In further embodiment of the invention, the method may comprise treating and/or controlling the poultry red mites present at a determined location based upon the predicted moment for treatment and/or controlling. This may result in a fully automated process of monitoring, predicting and treating and/controlling. Mite infestation will then be minimized continuously. Automated treatment may for instance be obtained by exposing the counted mites to a fungus that infects the mites to control the mites. Other treatment methods may for instance comprises using acaricids, impregnated poultry red mite traps, using silicas, heat treatment, using natural enemies of the poultry red mite and other suitable treatments.

### Brief description of the drawings

The invention will now be further elucidated by means of, non-limiting, examples referring to the drawing, in which
Fig. 1 shows a schematic representation of an example of the system for determining a number of insects and for indicating a moment for treatment of the insects according to the invention;
Fig. 2 shows a schematic cross sectional view of an embodiment of the insect counting device according to the invention;
Fig. 3 shows cross section A-A of Fig. 2;
Fig. 4 shows cross section B-B of Fig. 2:
Fig. 5 shows an exemplary graph of the population growth of poultry red mite as a function of time;
Fig. 6 shows a schematic cross sectional view of an embodiment of the insect counting device according to the invention;
Fig. 7 shows a schematic cross sectional view of an embodiment of the insect counting device according to the invention; and
Fig. 8 shows a plurality of insect counting devices according to the invention.

It is noted that identical or corresponding elements in the different drawings are indicated with identical or corresponding reference numerals.

### Detailed description of the invention

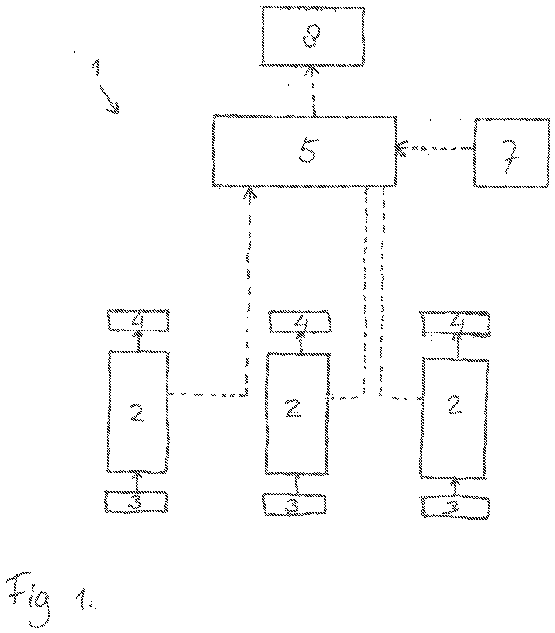

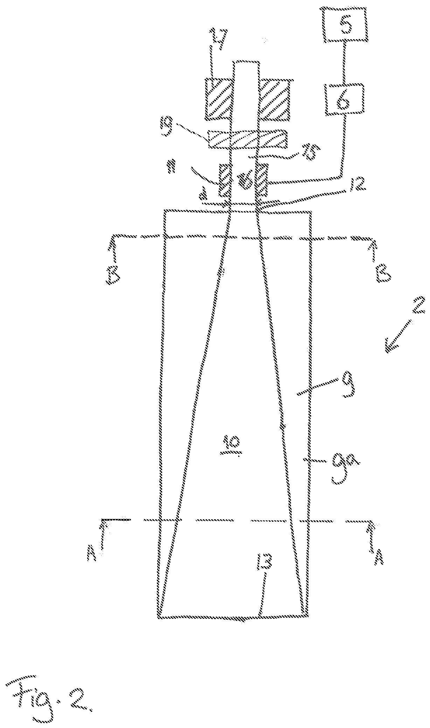

Fig. 1 shows a schematic representation of a system 1 for determining a number of insects, in this example of poultry red mites, at a poultry facility. The system 1 comprises a plurality of poultry red mites counting devices 2 that are distributed in the poultry facility and arranged between poultry red mite hiding locations 3 and poultry, for instance nesting and resting places 4 of hens during darkness. In figure 1, the displacement of the mites between the hiding locations 3 and the resting places 4 is indicated with continuous lines. Each counting device 2 is operatively coupled to a processing unit 5, for instance via the processor 6 (see Figure 2) provided in the counting device 2. The processing unit 5 comprises an interface 7 for providing the processing unit 5 with process input variables. It is noted that the respective data streams between the counting device 2, the processing unit 5, the interface 7 and the indicating means 8 in figure 1 are represented by dashed lines. The processing unit 5 comprises a memory (not shown) for storing said input variables, an dynamic adaptive model and past, present and optionally future mite count values transmitted by the counting devices 2. The processing unit 5 is provided with indicating means 8 for indicating a moment in time and/or location for treatment. Such indicating means 8 may comprise a monitor or other suitable means.

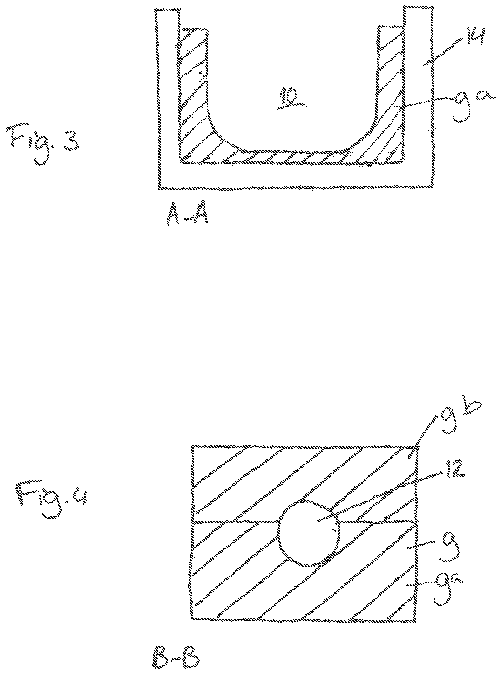

In Fig. 2 an embodiment of the poultry red mite counting device 2 is shown. The mite counting device 2 may be manufactured of brass. Also copper or galvanized metal, or a plastics material may be used. The mite counting device 2 has a body 9 comprising a receiving section 10 in a lower part 9a of the body 9 for receiving the poultry red mites when travelling from the hiding places 3 towards the poultry 4 (see Fig. 1). The counting device 2 further comprises a sensor device, in this example comprising an infrared sensor 11 for counting the amount of passing mites. Depending on the sensor, the size of said mites may be determined as well. The sensor 11 is arranged adjacent the exit opening 12 of the counting device 2. The receiving section 10 comprises an entrance opening 13 provided at the end of the counting device 2 opposite the exit opening 12. In this example, the entrance opening 13 has a substantially rectangular cross section (see Fig. 3) having corners with a very small radius. The device 2 is configured at the entrance side to cooperate with and fit in a U-shaped beam 14 (see Fig. 3). In this example, the radius of the inner corners of the receiving section 10 increases towards the exit opening 12 (see Fig. 4) such that the exit opening has a substantial circular cross section, and at the same time, the elongate receiving section tapers towards the exit opening 12. Preferably, the longitudinal channel comprises a cover 9b (see Figure 4) having a length of at least 5 centimetres, for instance 13 centimetres. In the shown embodiment, the channel is enclosed by the lower part 9a of the body 9 and the cover 9b. In a different embodiment (not shown), the channel may be enclosed by a single part dependent on the manufacturing method. The sensor 11 is provided adjacent the exit opening 12 on a tube 15. The inner diameter of the counting space 16 of the sensor 11 and thus of the exit opening 12 is approximately 1-2 mm. As is visible in Fig. 2 the transition between the receiving section 10 and the tube 15, at the location of the exit opening 12 is an angular transition. On the tube 15 an insect removal device 17, in this example a pump, for removing the counted mites by means of air suction, for instance with a speed of approximately 5.5 m/s, preferably with a speed of approximately 10m/s in a pipe having an inner diameter of approximately 1-2 mm with and external diameter of approximately 3.175 mm (1/8 inch). In the shown embodiment, the mites are collected in a filter 19 arranged between the sensor device 11 and the pump 17. In a different embodiment, the device 17 may comprise a different construction but being configured for generating an air flow to remove the mites. The sensor 11 is configured for detecting passing particles. Upon passing of a particle, in this example a poultry red mite, a signal is generated. Said signal is transmitted to the processor 6 of the sensor device. The configuration of the processor 6 determines if the transmitted signal represents a valid mite count or not. If the signal intensity exceeds a predetermined threshold value, the processor registers the received signal as a valid mite count. The processor 6 may store the valid counts and may transmit said count values to the processing unit 5 after a predetermined time period. Instead, the processor 6 may transmit the valid count value directly to the processing unit 5. After determining a valid count, the processor 5 may control the removal device 17 for removal of the counted mite. Also the removing time, i.e. the time the removal device 17 is operating, may be controlled.

The system 1 and the poultry red mite counting device 2 as described thus far can be used in a method for determining a number of insects, for instance poultry red mites at a poultry facility, and for indicating a moment for treatment of the insects to prevent, or at least minimize, insect infestation in said facility.

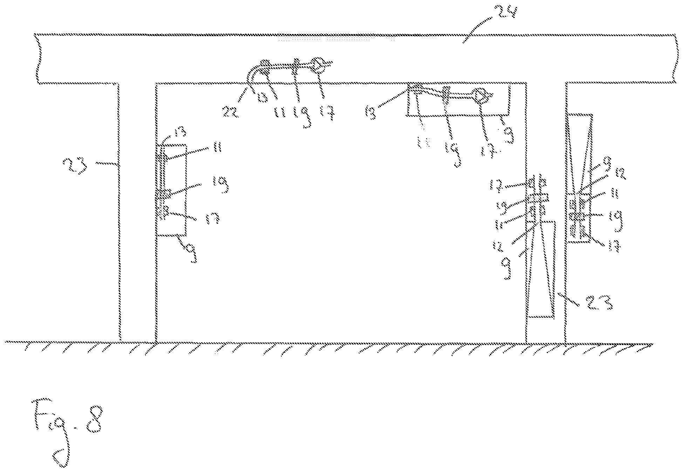

The different counting devices 2 are placed inside a poultry facility at different locations, see Fig. 8, preferably such that the devices 2 extend in a substantially vertical direction, wherein the entrance opening 13 faces downward and the exit opening 12 extends substantially upward. The counting devices can e.g. be positioned against or (at least partly) in vertically extending support beam
23 or perches 24. When the mites are displacing from their hiding locations 3 towards the poultry 4, they tend to displace in a substantially vertical upward direction. Alternatively, one or more of the devices 2 are placed such that the devices 2 extend in a substantially vertical direction, wherein the entrance opening 13 faces upward and the exit opening 12 extends substantially downward for counting the mites when displacing from the poultry to their hiding locations 3. It is also possible that one or more of the devices 2 are placed beneath the poultry (e.g. beneath nesting and resting places 4 of hens during darkness such as the perches 24) extending in a substantially horizontal direction, such that the mites can be counted while displacing from their hiding locations 3 towards the poultry 4, or vice versa. It is also possible that one or more of the devices 2 is positioned inside, or at least partially inside, the perch 24. The perch 24 may thereto be embodied as a hollow tube, e.g. of metal or plastics material. The entrance opening may then be formed by a hole 22 in the perch. The hole 22 preferably has a diameter that is substantially equal to the diameter of the entrance opening 13. The diameter of the hole 22 can be 1-2 mm. It is also possible that the hole 22 is formed in a cover covering a recess in the perch, the recess allowing mounting of the counting device at least partly in the perch. The hole 22 and the entrance opening 13 then preferably are positioned at the lower side of the perch 24.

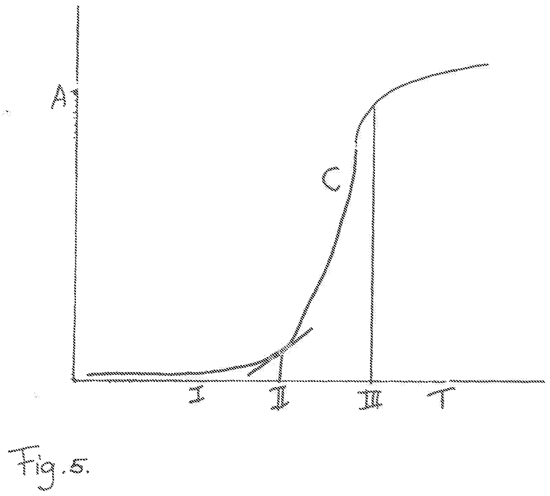

Due to the rounded inner corners, the mites will not likely clog or hide inside receiving section 10 of the counting device 2. After leaving the exit opening 12 and passing through the counting space 16 of the sensor 11, a mite count value is registered by processor 8 and subsequently transmitted to the processing unit 5. The processing unit 5 is provided with a dynamic adaptive model, for instance based on Bayesian adaptive modelling. Historical mite count values and present mite count values and process variables are input in the model. Since temperature is of great importance to the growth of the individual mites and thus also of the population, the ambient temperature value is also input in the processing unit 5. In Fig. 5 a curve C shows an estimated growth of a mite population (axis A) during a period of time (axis T) for a certain poultry facility. The estimated values of the population indicated by the curve C are updated based on the above mentioned mite count values and on the process variables using dynamic adaptive modelling. By comparing the instantaneous mite count value with the values indicated by the curve C it is possible to predict the moment II at which the mite population exponentially increases (the point where the angle of the tangent line increases). Based thereon, a moment I can be determined at which it is advisable to treat and/or control the mites to prevent that the mite population growth will further follow the curve C. This is indicated to a poultry farmer so that he can act upon the advice.

Alternatively, the system can be configured to automatically start the treatment and/or control of the mites. By comparing the instantaneous mite count value with the values indicated by the curve C it is also possible to predict the moment III at which the mite population growth rate starts to decrease again (the point where the angle of a tangent line decreases). This moment III can be used as a moment before which treatment or control of the mites has to be started. Treatment after the moment III can be seen as less useful since the mite population is at an optimum, in which casualties by treatment can easily be replaced by new mites.

In the described example, the relationship between the amount of mites indicating the size of the mite population and any moment in time may be calculated and updated based on in-line measurements of the amount of mites. Preferably, the dynamic adaptive model is based on past mite count values gained in the poultry facility and on research date, for instance gained at different poultry facilities, and the input process parameters such as the ambient temperature. The adaptive model is self-correcting and is updated real-time on the basis of the real-time mite count values such that a prediction of future mite population size at any moment in time is possible and wherein the prediction will be better after usage of the system.

The adaptive model may also be used to determine the optimum moment for treatment of the mite population. Thereto, the adaptive model may be provided with a setpoint value for the maximum desired mite population size. The adaptive model may then forecast the optimum moment for treatment taking into account the estimated values of the population size as indicated by the curve C. The adaptive model may also itself determine the setpoint value for the maximum desired mite population size taking into account one or more of the costs associated with treatment of the mites, environmental load of the treatment, poultry welfare, production losses due to mites, temperature and humidity.

In an embodiment, a Bayesian dynamic model is used. The Bayesian model comprises a plurality of input parameters, including one or more of the current mite population size, historic data on the mite population size, the costs associated with treatment of the mites, environmental load of the treatment, poultry welfare, production losses due to mites, temperature and humidity.

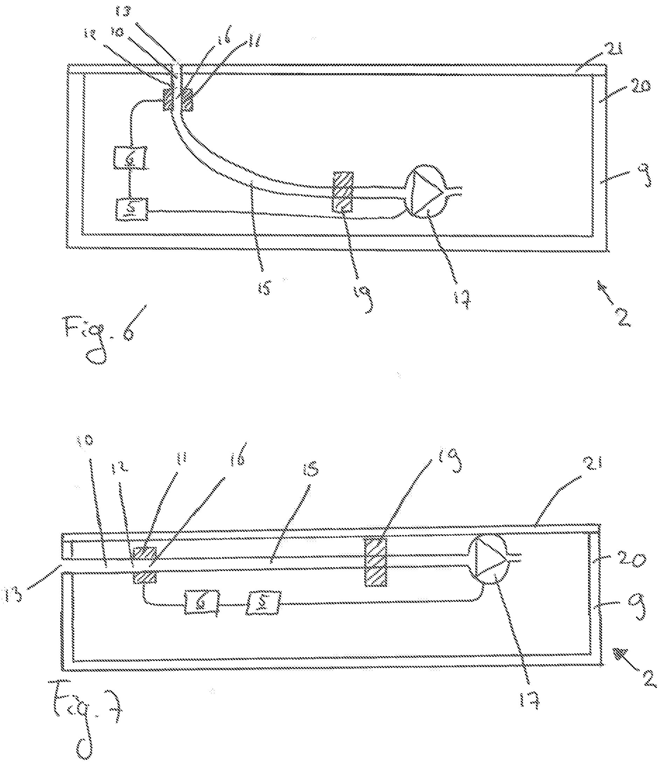

Fig. 6 shows a schematic cross sectional view of an embodiment of the insect counting device 2 according to the invention. The counting device according to Fig. 6 can be used in the system 1 of Fig. 1 instead of or in addition to the insect counting device of Figs 2-4. Features of the counting device 2 in Fig. 6 that correspond with features shown in relation to the device 2 in Figs 2-4 have like reference numerals. In this example, the insect counting device 2 includes a body 9 comprising a casing 20 and a lid 21 closing the casing.

In the example of Fig. 6, the mite counting device 2 has a receiving section 10 for receiving the poultry red mites. In this example the receiving has a substantially constant cross section along its length from the entrance opening 13 to the exit opening 12. Here the cross section of the receiving section is substantially circular. A diameter of the cross section of the receiving section is for instance less than or equal to 2 mm, e.g. less than or equal to 1.5 mm. The receiving section 10 comprises an entrance opening 13 provided at the end of the counting device 2 opposite the exit opening 12. The counting device 2 further comprises a sensor device, in this example comprising an infrared sensor 11 for counting the amount of passing mites. Depending on the sensor and/or processor, the size of said mites may be determined as well. The sensor 11 is arranged adjacent the exit opening 12 of the counting device 2. In this example, the entrance opening 13 has a substantially circular cross section. In this example the cross section of the entrance opening 13 is substantially equal to a cross section of the receiving section 10, although this is not essential in all applications. The entrance opening can e.g. have a diameter of approximately 1-2 mm. It has been found that the poultry red mites accept such entrance opening as hiding location and actively displace into the counting device of their own motion. The entrance opening can be made even more attractive as a hiding location for the poultry red mites by providing a heating component in the counting device, e.g. within the casing. In this example the cross section of the exit opening 12 is substantially equal to a cross section of the receiving section 10. The exit opening being substantially equal to the cross section of the receiving section, prevents the insects from getting grip and remaining at a position with a step in diameter. Preferably the diameter of the receiving section is equal to the diameter of the exit opening within 0.2 mm. The sensor 11 is provided adjacent the exit opening 12 on a tube 15. The inner diameter of the counting space 16 of the sensor 11 and thus of the exit opening 13 is approximately 1-2 mm. On the tube 15 an insect removal device 17, in this example a pump, for removing the counted mites by means of air suction, for instance with a speed of approximately 5.5 m/s, preferably with a speed of approximately 10m/s in a pipe having an inner diameter of approximately 1-2 mm with and external diameter of approximately 1/8 inch. In the shown embodiment, the mites are collected in a filter 19 arranged between the sensor device 11 and the pump 17. In a different embodiment, the device 2 may comprise a different construction but being configured for generating an air flow to remove the mites. The sensor 11 is configured for detecting passing particles. Upon passing of a particle, in this example a poultry red mite, a signal is generated as explained above.

Fig. 7 shows a schematic cross sectional view of an embodiment of the insect counting device 2 according to the invention. The counting device according to Fig. 7 can be used in the system 1 of Fig. 1 instead of or in addition to the insect counting device of Figs 2-4 and 6. The counting device according to Fig. 7 differs from the counting device according to Fig. 6 in the orientation of the entrance opening and receiving section. In Fig. 7 the receiving section extends substantially horizontally if the counting device is positioned substantially horizontally. In Fig. 6 the receiving section extends substantially vertically if the counting device is positioned substantially horizontally.

In the foregoing specification, the invention has been described with reference to specific examples of embodiments of the invention. It will, however, be evident that various modifications and changes may be made therein without departing from the broader scope of the invention as set forth in the appended claims.

It is for instance possible that the insect counting device comprises different elements and different dimensions. For instance, the insect receiving section may comprise a round pipe that tapers towards the exit opening, wherein a further round pipe, with a smaller diameter, extends from the exit opening at least along the sensor device. Also different materials may be used for manufacturing said counting device.

In the examples, the mites are collected in the filter arranged between the sensor device and the pump. It is also possible that the counting device does not contain a filter. It is for instance possible that the mites are blown into the surroundings of the counting device by means of the air flow generated by the pump.

In the example of Fig. 6 the tube between the sensor and the pump is curved. It will be appreciated that it is also possible that the receiving section is curved.

In the examples, the counting device has a body 9. It is also possible that the counting device does not include a body (e.g. no casing and/or lid) so as to be positionable in small crevices beneath the hens.

However, other modifications, variations and alternatives are also possible. The specifications, drawings and examples are, accordingly, to be regarded in an illustrative rather than in a restrictive sense. The scope of the invention is defined by the appended claims.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage..

## Claims

1. Crawling insect counting device for determining a number of poultry red mites, in a poultry facility, during a time period, wherein the device (2) comprises a receiving section (10) configured for receiving poultry red mites and for enabling the displacement of the poultry red mites, the insect counting device (2) further comprising a sensor device (11) arranged adjacent an exit opening (12) of the receiving section (10), wherein the sensor device (11) is adapted to count individual poultry red mites leaving the receiving section (10) through the exit opening (12) and passing said sensor device.

2. Insect counting device according to claim 1, wherein the sensor device (11) comprises a counting space (16) provided next to the exit opening (12), wherein the counting space has a substantially elongate shape and preferably a substantially constant diameter, for instance of approximately 1-2 mm such as about 1.5 mm, along an entire length of the space.

3. Insect counting device according to claim 1 or 2, wherein the device comprises an insect removal device (17) configured for quick removal of the poultry red mites after passing a sensor of the sensor device (11), wherein the insect removal device (17) is configured for air suction, blowing air or creating a venturi effect, preferably to create a flow with a speed of approximately 5.5 m/s or more, preferably a speed of approximately 10 m/s in a pipe with an inner diameter of approximately 1-2 mm.

4. Insect counting device according to any one of the preceding claims, wherein the insect counting device further comprises a processor (6) for determining the validity of a poultry red mite count value and for transmitting the valid poultry red mite count value to a processing unit (5) and/or for controlling the insect removal device.

5. Insect counting device according to any one of the preceding claims in combination with a perch (24), wherein the counting device is at least partially positioned inside the perch.

6. Combination according to claim 5, wherein the perch (24) includes a hole (22) which is in communication with the entrance opening of the counting device.

7. A system (1) for determining a number of poultry red mites at a poultry facility, and for indicating a moment for treatment of the poultry red mites to prevent, or at least minimize, poultry red mite infestation in said facility, the system comprising at least one insect counting device (2) according to any one of the preceding claims and a processing unit (5) operatively coupled to the processor (6) of the insect counting device for receiving real-time poultry red mite count values from the insect counting device, wherein the processing unit is configured to compare the received poultry red mite count value with an estimated value and based on the comparison to determine a suitable moment for treatment.

8. The system (1) according to claim 7, wherein the processing unit is programmed with a dynamic adaptive model that is able to determine said estimated value based on at least one process input variable and measured poultry red mite count values over time.

9. The system (1) according to any claim 7 or 8, wherein the at least one insect counting device (2) is arranged at least partially inside a perch (24).

10. The system (1) according to any one of claims 7-9, wherein the entrance opening (13) of the receiving section (10) is located at a lower end of the device and the sensor device is located at an upper end of the device, such that poultry red mites can displace along a substantially vertically extending upward path.

11. The system (1) according to any one of claims 7-10, wherein the system comprises multiple insect counting devices (2), wherein the devices are arranged at different locations at mutual distance such that the system can determine a location at which the treatment is advised.

12. Poultry facility for raising and keeping poultry, such as an aviary barn, barn system, enriched cages or a free range farm, wherein the facility is provided with a system (1) according to any one of claims 7-11, comprising multiple mite counting devices (2) according to any one of claims 1-6.

13. Poultry facility according to claim 12, wherein depending on the kind of farm, each counting device is located between different mite hiding locations and poultry in the vicinity of each hiding location, such that the mites pass through the sensor device when moving from the hiding location towards the poultry or vice versa.

14. Method for determining a number of poultry red mites at a poultry facility, and for indicating a moment for treatment of the poultry red mites to prevent, or at least minimize, poultry red mite infestation in said facility, the method comprising counting poultry red mites over time, preferably by using at least one insect counting device (2) according to any one claims 1-6, and comparing real-time poultry red mite count values with an estimated value and based on the comparison to predict a suitable moment for treatment, wherein the estimated value is determined based on measured poultry red mite count values over time.

15. Method according to claim 14, wherein the estimated value is determined based on at least one process input variable and measured poultry red mite count values over time, wherein the estimated value is e.g. determined using dynamic adaptive modelling such as Bayesian dynamic modelling.

16. Method according to any one of claims 14-15, wherein the method further comprises treating and/or controlling the poultry red mites present at a determined location based upon the predicted moment for treatment and/or controlling.

## Patentansprüche

1. Zählvorrichtung für kriechende Insekten zum Bestimmen einer Anzahl von Geflügelrotmilben in einer Geflügelanlage während eines Zeitraums, wobei die Vorrichtung (2) einen Aufnahmeabschnitt (10) umfasst, der zur Aufnahme von Geflügelrotmilben und zum Ermöglichen der Verlagerung von Geflügelrotmilben konfiguriert ist, wobei die Insektenzählvorrichtung (2) ferner eine Sensorvorrichtung (11) umfasst, die neben einer Austrittsöffnung (12) des Aufnahmeabschnitts (10) angeordnet ist, wobei die Sensorvorrichtung (11) dazu angepasst ist, einzelne Geflügelrotmilben zu zählen, die den Aufnahmeabschnitt (10) durch die Austrittsöffnung (12) verlassen und die Sensorvorrichtung passieren.

2. Insektenzählvorrichtung nach Anspruch 1, wobei die Sensorvorrichtung (11) einen Zählraum (16) aufweist, der neben der Austrittsöffnung (12) vorgesehen ist, wobei der Zählraum eine im Wesentlichen längliche Form und vorzugsweise einen im Wesentlichen konstanten Durchmesser beispielsweise von ca. 1-2 mm, wie ca. 1,5 mm, entlang einer gesamten Länge des Raums, aufweist.

3. Insektenzählvorrichtung nach Anspruch 1 oder 2, wobei die Vorrichtung eine Insektenentfernungsvorrichtung (17) umfasst, die zum schnellen Entfernen der roten Geflügelrotmilben nach Passieren eines Sensors der Sensorvorrichtung (11) konfiguriert ist, wobei die Insektenentfernungsvorrichtung (17) zum Ansaugen von Luft, zum Blasen von Luft oder zum Erzeugen eines Venturi-Effekts konfiguriert ist, vorzugsweise zum Erzeugen einer Strömung mit einer Geschwindigkeit von ca. 5,5 m/s oder mehr, vorzugsweise einer Geschwindigkeit von ca. 10 m/s in einem Rohr mit einem Innendurchmesser von ca. 1 bis 2 mm.

4. Insektenzählvorrichtung nach einem der vorhergehenden Ansprüche, wobei die Insektenzählvorrichtung ferner einen Prozessor (6) zum Bestimmen der Gültigkeit eines Geflügelrotmilbenzählwerts und zum Übertragen des gültigen Geflügelrotmilbenzählwerts an eine Verarbeitungseinheit (5) und/oder zur Steuerung der Insektenentfernungsvorrichtung umfasst.

5. Insektenzählvorrichtung nach einem der vorhergehenden Ansprüche in Kombination mit einer Sitzstange (24), wobei die Zählvorrichtung wenigstens teilweise innerhalb der Sitzstange positioniert ist.

6. Kombination nach Anspruch 5, wobei die Sitzstange (24) ein Loch (22) aufweist, das mit der Eintrittsöffnung der Zählvorrichtung in Verbindung steht.

7. System (1) zum Bestimmen einer Anzahl von Geflügelrotmilben in einer Geflügelanlage und zum Anzeigen eines Zeitpunkts für die Behandlung der Geflügelrotmilben, um den Befall mit Geflügelrotmilben in der Anlage zu verhindern oder wenigstens zu minimieren, wobei das System wenigstens eine Insektenzählvorrichtung (2) nach einem der vorhergehenden Ansprüche und eine Verarbeitungseinheit (5) umfasst, die operativ mit dem Prozessor (6) der Insektenzählvorrichtung gekoppelt ist, um Geflügelrotmilbenzählwerte in Echtzeit von der Insektenzählvorrichtung zu empfangen, wobei die Verarbeitungseinheit konfiguriert ist, um den empfangenen Geflügelrotmilbenzählwert mit einem geschätzten Wert zu vergleichen und basierend auf dem Vergleich einen geeigneten Zeitpunkt für die Behandlung zu bestimmen.

8. System (1) nach Anspruch 7, wobei die Verarbeitungseinheit mit einem dynamischen adaptiven Modell programmiert ist, das den geschätzten Wert basierend auf wenigstens einer Prozesseingangsvariablen und gemessenen Geflügelrotmilbenzählwerten über die Zeit bestimmen kann.

9. System (1) nach einem der Ansprüche 7 oder 8, wobei die wenigstens eine Insektenzählvorrichtung (2) wenigstens teilweise innerhalb einer Sitzstange (24) angeordnet ist.

10. System (1) nach einem der Ansprüche 7 bis 9, wobei die Eintrittsöffnung (13) des Aufnahmeabschnitts (10) an einem unteren Ende der Vorrichtung angeordnet ist und die Sensorvorrichtung an einem oberen Ende der Vorrichtung angeordnet ist, so dass sich Geflügelrotmilben entlang eines sich im Wesentlichen vertikal erstreckenden Aufwärtspfads verschieben können.

11. System (1) nach einem der Ansprüche 7 bis 10, wobei das System mehrere Insektenzählvorrichtungen (2) umfasst, wobei die Vorrichtungen an unterschiedlichen Orten in gegenseitigem Abstand angeordnet sind, so dass das System einen Ort bestimmen kann, an dem die Behandlung geraten wird.

12. Geflügelanlage zur Aufzucht und Haltung von Geflügel, wie zum Beispiel ein Vogelhaus, ein Stallsystem, angereicherte Käfige oder ein Freilandbetrieb, wobei die Anlage mit einem System (1) nach einem der Ansprüche 7 bis 11 versehen ist, das mehrere Milbenzählvorrichtungen (2) nach einem der Ansprüche 1 bis 6 umfasst.

13. Geflügelanlage nach Anspruch 12, wobei sich in Abhängigkeit von der Art der Farm jede Zählvorrichtung zwischen verschiedenen Milbenversteckorten und Geflügel in der Nähe jedes Versteckorts befindet, so dass die Milben die Sensorvorrichtung passieren, wenn sie sich aus dem Versteckort zum Geflügel bewegen oder umgekehrt.

14. Verfahren zum Bestimmen einer Anzahl von Geflügelrotmilben in einer Geflügelanlage und zum Anzeigen eines Zeitpunkts für die Behandlung der Geflügelrotmilben, um den Befall mit Geflügelrotmilben in der Anlage zu verhindern oder wenigstens zu minimieren, wobei das Verfahren das Zählen von Geflügelrotmilben über die Zeit umfasst, vorzugsweise unter Verwendung wenigstens einer Insektenzählvorrichtung (2) nach einem der Ansprüche 1 bis 6 und Vergleichen von Geflügelrotmilbenzählwerten in Echtzeit mit einem geschätzten Wert und basierend auf dem Vergleich, um einen geeigneten Zeitpunkt für die Behandlung vorherzusagen, wobei der geschätzte Wert auf der Grundlage der gemessenen Geflügelrotmilbenzählwerte über die Zeit bestimmt wird.

15. Verfahren nach Anspruch 14, wobei der geschätzte Wert basierend auf wenigstens einer Prozesseingangsvariablen und gemessenen Geflügelrotmilbenzählwerten über die Zeit bestimmt wird, wobei der geschätzte Wert beispielsweise unter Verwendung von dynamischer adaptiver Modellierung, wie beispielsweise der bayesianischen dynamischen Modellierung, bestimmt wird.

16. Verfahren nach einem der Ansprüche 14 bis 15, wobei das Verfahren ferner das Behandeln und/oder die Kontrolle der an einem bestimmten Ort vorhandenen Geflügelrotmilben basierend auf dem vorhergesagten Zeitpunkt zum Behandeln und/oder zur Kontrolle umfasst.

## Revendications

1. Dispositif de comptage d'insectes rampants pour déterminer un nombre de poux rouges des volailles, dans une installation pour les volailles, pendant une période, où le dispositif (2) comprend une section de réception (10) configurée pour recevoir des poux rouges des volailles pour permettre le déplacement des poux rouges des volailles, le dispositif de comptage d'insectes (2) comprenant en outre un dispositif détecteur (11) disposé en position adjacente à une ouverture de sortie (12) de la section de réception (10), où le dispositif détecteur (11) est adapté pour compter les poux rouges des volailles individuels quittant la section de réception (10) par l'ouverture de sortie (12) et franchissant ledit dispositif détecteur.

2. Dispositif de comptage d'insectes selon la revendication 1, où le dispositif détecteur (11) comprend un espace de comptage (16) prévu à proximité de l'ouverture de sortie (12), où l'espace de comptage a une forme sensiblement allongée et de préférence un diamètre sensiblement constant, par exemple d'approximativement 1-2 mm comme environ 1,5 mm, le long d'une longueur entière de l'espace.

3. Dispositif de comptage d'insectes selon la revendication 1 ou 2, où le dispositif comprend un dispositif de retrait d'insectes (17) configuré pour le retrait rapide des poux rouges des volailles après le franchissement d'un détecteur du dispositif détecteur (11), où le dispositif de retrait d'insectes (17) est configuré pour l'aspiration d'air, le soufflage d'air ou la création d'un effet venturi, de préférence pour créer un courant avec une vitesse d'approximativement 5,5 m/s ou plus, de préférence une vitesse d'approximativement 10 m/s dans un tube avec un diamètre interne d'approximativement 1-2 mm.

4. Dispositif de comptage d'insectes selon l'une quelconque des revendications précédentes, où le dispositif de comptage d'insectes comprend en outre un processeur (6) pour déterminer la validité d'une valeur de nombre de poux rouges des volailles et pour transmettre la valeur de nombre de poux rouges des volailles valide à une unité de traitement (5) et/ou pour commander le dispositif de retrait d'insectes.

5. Dispositif de comptage d'insectes selon l'une quelconque des revendications précédentes en combinaison avec un perchoir (24), où le dispositif de comptage est positionné au moins en partie à l'intérieur du perchoir.

6. Combinaison selon la revendication 5, où le perchoir (24) inclut un trou (22) qui est en communication avec l'ouverture d'entrée du dispositif de comptage.

7. Système (1) pour déterminer un nombre de poux rouges des volailles au niveau d'une installation pour les volailles, et pour indiquer un moment pour le traitement des poux rouges des volailles pour prévenir, ou au moins minimiser, une infestation par les poux rouges des volailles dans ladite installation, le système comprenant au moins un dispositif de comptage d'insectes (2) selon l'une quelconque des revendications précédentes et une unité de traitement (5) couplée de manière fonctionnelle au processeur (6) du dispositif de comptage d'insectes pour recevoir des valeurs de nombre de poux rouges des volailles en temps réel depuis le dispositif de comptage d'insectes, où l'unité de traitement est configurée pour comparer la valeur de nombre de poux rouges des volailles reçue avec une valeur estimée et sur la base de la comparaison pour déterminer un moment approprié pour le traitement.

8. Système (1) selon la revendication 7, où l'unité de traitement est programmée avec un modèle adaptatif dynamique qui est capable de déterminer ladite valeur estimée sur la base d'au moins une variable d'entrée de processus et des valeurs de nombre de poux rouges des volailles mesurées au cours du temps.

9. Système (1) selon l'une quelconque des revendications 7 ou 8, où le au moins un dispositif de comptage d'insectes (2) est disposé au moins en partie à l'intérieur d'un perchoir (24).

10. Système (1) selon l'une quelconque des revendications 7-9, où l'ouverture d'entrée (13) de la section de réception (10) est située à une extrémité inférieure du dispositif et le dispositif détecteur est situé à une extrémité supérieure du dispositif, de sorte que les poux rouges des volailles peuvent se déplacer le long d'un passage vers le haut qui s'étend sensiblement verticalement.

11. Système (1) selon l'une quelconque des revendications 7-10, où le système comprend de multiples dispositifs de comptage d'insectes (2), où les dispositifs sont disposés à différents emplacements à une distance mutuelle telle que le système peut déterminer un emplacement auquel le traitement est judicieux.

12. Installation pour les volailles pour élever et garder des volailles, comme une grange à poulailler, un système de grange, des cages enrichies ou une ferme ouverte, où l'installation est munie d'un système (1) selon l'une quelconque des revendications 7-11, comprenant de multiples dispositifs de comptage de poux (2) selon l'une quelconque des revendications 1-6.

13. Installation pour les volailles selon la revendication 12, où selon le type de ferme, chaque dispositif de comptage est situé entre des emplacements de dissimulation de poux différents et les volailles au voisinage de chaque emplacement de dissimulation, de sorte que les poux franchissent le dispositif détecteur quand ils se déplacent de l'emplacement de dissimulation en direction des volailles ou vice versa.

14. Procédé pour déterminer un nombre de poux rouges des volailles au niveau d'une installation pour les volailles, et pour indiquer un moment pour le traitement des poux rouges des volailles pour prévenir, ou au moins minimiser, une infestation par les poux rouges des volailles dans ladite installation, le procédé comprenant le comptage des poux rouges des volailles au cours du temps, de préférence en utilisant au moins un dispositif de comptage d'insectes (2) selon l'une quelconque des revendications 1-6, et la comparaison des valeurs de nombre de poux rouges des volailles en temps réel avec une valeur estimée et sur la base de la comparaison pour prédire un moment approprié pour le traitement, où la valeur estimée est déterminée sur la base de valeurs de nombre de poux rouges des volailles mesurées au cours du temps.

15. Procédé selon la revendication 14, où la valeur estimée est déterminée sur la base d'au moins une variable d'entrée de processus et des valeurs de nombre de poux rouges des volailles mesurées au cours du temps, où la valeur estimée est déterminée par exemple au moyen d'une modélisation adaptative dynamique comme la modélisation dynamique bayesienne.

16. Procédé selon l'une quelconque des revendications 14-15, où le procédé comprend en outre le traitement et/ou la lutte contre les poux rouges des volailles présents à un emplacement déterminé sur la base du moment prédit pour le traitement et/ou la lutte.
